# EUROPEAN PATENT APPLICATION

(11) **EP 4 506 926 A1**
(43) Date of publication of application: **12.02.2025**
(21) Application number: 22947645.2
(22) Date of filing: 29.09.2022
(51) Int. Cl.: G09F 9/30, B29C 45/14, D06F 34/28

(54) **FILM, DISPLAY PANEL, DISPLAY DEVICE AND HOUSEHOLD APPLIANCE**

(30) Priority: 20.06.2022 CN 202210699650; 20.06.2022 CN 202221560142 U
(71) Applicant: WUXI LITTLE SWAN ELECTRIC CO., LTD., Wuxi, Jiangsu 214028 (CN)
(72) Inventor: LI, Birong, Wuxi, Jiangsu 214028 (CN); CAO, Chunde, Wuxi, Jiangsu 214028 (CN); ZHANG, Rusheng, Wuxi, Jiangsu 214028 (CN); SUN, Jieyi, Wuxi, Jiangsu 214028 (CN)
(74) Representative: RGTH
(86) International application number: PCT/CN2022/122538
(87) International publication number: WO 2023/245905

(57) **Abstract**

A film (10), a display panel (100), a display device (1000) and a household appliance. The film (10) is used for in-mold decoration, and the film (10) comprises a base material layer (11) and at least two functional layers, wherein the base material layer (11) has an outer surface and an inner surface; and part of each functional layer is printed on the outer surface of the base material layer (11), and the remaining part of each functional layer is printed on the inner surface of the base material layer (11). The base material layer (11) is subjected to a double-sided printing production process, and with the same total number of functional layers, using double-sided printing can reduce the number of functional layers on a single side, and can decrease the defective rate caused by too many layers printed on the single side, thereby improving the product percent of pass.

## Description

### CROSS-REFERENCE TO RELATED APPLICATION

This application is filed based on and claims priorities to Chinese patent application No. 202221560142.X filed on June 20, 2022 and Chinese patent application No. 202210699650.4 filed on June 20, 2022, the disclosures of which are hereby incorporated by reference in their entireties.

### TECHNICAL FIELD

The application relates to the technical field of in-mold decoration, and in particular to a film, a display panel, a display apparatus, and a household appliance.

### BACKGROUND

Taking a display panel of a household appliance as an example, In-Mold Decoration (IMD) processes used in the related art are to arrange each of printing layers on an outer side of a substrate layer of a film layer-by-layer, place the printed film on a side wall of a mold cavity of a mold, and then perform injection molding. A defective product rate of the film is relatively high, resulting in a relatively high substandard rate of the formed display panel.

### SUMMARY

In view of this, embodiments of the application are desired to provide a film, a display panel, a display apparatus, and a household appliance which may improve a qualification rate of a product.

An embodiment of the application provides a film for IMD, the film comprises a substrate layer and at least two functional layers.

The substrate layer is provided with an outer surface and an inner surface.

A part of each of the functional layers is printed on the outer surface of the substrate layer, and remaining parts of each of the functional layers are printed on the inner surface of the substrate layer.

In some implementations, each of the functional layers may comprise a pattern layer and a circuit layer, and the circuit layer is located on an inner side of the pattern layer.

In some implementations, the circuit layer, the substrate layer, and the pattern layer may be sequentially arranged in a direction from an inner side to an outer side.

In some implementations, each of the functional layers may comprise a light homogenization layer configured to homogenize light, the pattern layer and the circuit layer are both located on an outer side of the light homogenization layer.

In some implementations, the light homogenization layer, the substrate layer, the circuit layer, and the pattern layer may be sequentially arranged in a direction from an inner side to an outer side.

In some implementations, the light homogenization layer, the circuit layer, the substrate layer, and the pattern layer may be sequentially arranged in a direction from an inner side to an outer side.

In some implementations, the light homogenization layer may be an ink diffusion layer.

In some implementations, the film may comprise an isolation sheet and a substrate connection belt arranged on a side of the substrate layer, connection circuits electrically connected to circuits in the circuit layer are arranged on the substrate connection belt, and the isolation sheet covers at least a connection circuit printed at an end of the substrate connection belt close to the substrate layer.

An embodiment of the application provides a display panel, the display panel comprises an inner film and an injection molding layer.

The inner film is the film according to any one of the embodiments of the application.

The injection molding layer is injection molded on an outer surface of the inner film.

In some implementations, the display panel may comprise an outer film, the injection molding layer is injection molded between the outer film and the inner film.

An embodiment of the application provides a display apparatus, the display apparatus comprises a display board box and the display panel according to any one of the embodiments of the application.

The display board box is provided with a light emitting source thereon.

The display board box is arranged on an inner side of the display panel, and the light emitting source is configured to output light to the display panel.

In some implementations, the display apparatus may comprise a mounting frame, the mounting frame is provided with a mounting space, the display board box is embedded in the mounting space, and the display panel is connected to the mounting frame and covers the mounting space.

An embodiment of the application provides a household appliance, the household appliance comprises a housing and the display apparatus according to any one of the embodiments of the application, the display apparatus is arranged on the housing.

In some implementations, the household appliance may be a clothes treatment device, the clothes treatment device comprises a knob configured to select a washing and care program, the display panel is provided with a mounting hole passing therethrough, and the knob rotatably passes through the mounting hole and is arranged in the mounting hole.

In the film according to the embodiment of the application, the substrate layer uses a double-sided printing production process, and in case that a total layer number of functional layers is the same, double-sided printing may reduce a layer number of functional layers at a single side, and may reduce a defective rate due to an excessive number of printing layers at the single side, thereby improving the qualification rate of the product.

### BRIEF DESCRIPTION OF THE DRAWINGS

FIG. 1 is a schematic structural diagram of a film according to a first embodiment of the application.
FIG. 2 is a schematic structural diagram of a film according to a second embodiment of the application.
FIG. 3 is a schematic structural diagram of a film according to a third embodiment of the application.
FIG. 4 is a schematic structural diagram of a display panel according to an embodiment of the application.
FIG. 5 is a schematic exploded view of the structure shown in FIG. 4.
FIG. 6 is a schematic structural diagram of a display apparatus according to an embodiment of the application.
FIG. 7 is a schematic view of the structure shown in FIG. 6 from another visual angle.
FIG. 8 is a schematic exploded view of the structure shown in FIG. 6.

### DETAILED DESCRIPTION

Implementations of the application will be further described in detail below with reference to the drawings and embodiments. The following embodiments are intended to describe the application, however, may not be used to limit the scope of the application.

In descriptions of the embodiments of the application, it should be noted that orientation or position relationships indicated by terms "inner", "outer" or the like are based on orientation or position relationships shown in the drawings, are only intended to facilitate describing the embodiments of the application and simplify descriptions, and are not intended to indicate or imply that the referred device or component must have a specific orientation, or must be configured and operate in a specific orientation, and thus may not be understood as limitation of the embodiments of the application. Furthermore, terms "first", "second" and "third" are only for the purpose of description, and may not be understood as indicating or implying relative importance.

An embodiment of the application provides a film 100 for a display panel.

For example, an injection molding material is injection molded on an outer surface of the film and forms the display panel by an In-Mold Decoration (IMD) process. Of course, it may be understood that the film 100 may also be applied to the display panel by other processes.

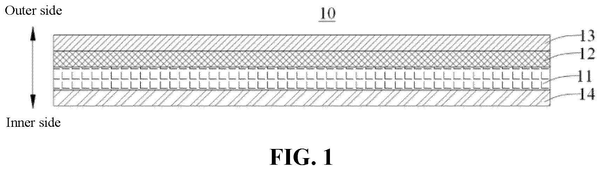

With reference to FIG. 1 to FIG. 3, the film comprises a substrate layer 11 and at least two functional layers.

The substrate layer 11 is provided with an outer surface and an inner surface. That is, the outer surface and the inner surface are located on two opposite sides of the substrate layer 11 respectively.

The substrate layer 11 is used as a carrier for printing, and is a sheet with a certain structural strength.

A raw material of the substrate layer 11 may be a resin such as Polyethylene terephthalate (PET), Polymethyl methacrylate (PMMA), Polycarbonate (PC), Polyvinyl chloride (PVC), Polypropylene (PP), acrylic resin, etc.

A part of each of the functional layers is printed on the outer surface of the substrate layer, and remaining parts of each of the functional layers are printed on the inner surface of the substrate layer. That is, double-sided printing is used for the substrate layer 11.

It should be noted that manners of printing are not limited, for example, they comprise, but are not limited to spraying, laser printing, coating, etc. In a word, each functional layer printed on the substrate layer 11 itself is not provided with a film-shaped carrier, each functional layer takes the substrate layer 11 as a carrier, and each functional layer is obtained by printing on the substrate layer 11 layer-by-layer.

It should be noted that the functional layers refer to printing layers related to a function of the film presented to the outside, such as a pattern layer 13, a circuit layer 12, a light homogenization layer 14, a gloss oil layer, or the like as described below.

In the related art, each functional layer is arranged on an outer side of the substrate layer 11, and errors occurred in each functional layer are easily accumulated and amplified due to layer-by-layer arrangement, resulting in a relatively high defective rate of the film product.

In the film according to the embodiment of the application, the substrate layer 11 uses a double-sided printing production process, and in case that a total layer number of functional layers is the same, double-sided printing may reduce a layer number of functional layers at a single side, and may reduce a defective rate due to an excessive number of printing layers at the single side, thereby improving the qualification rate of the product.

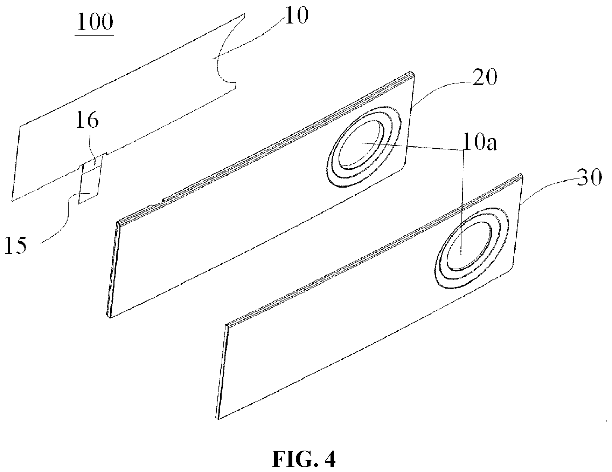

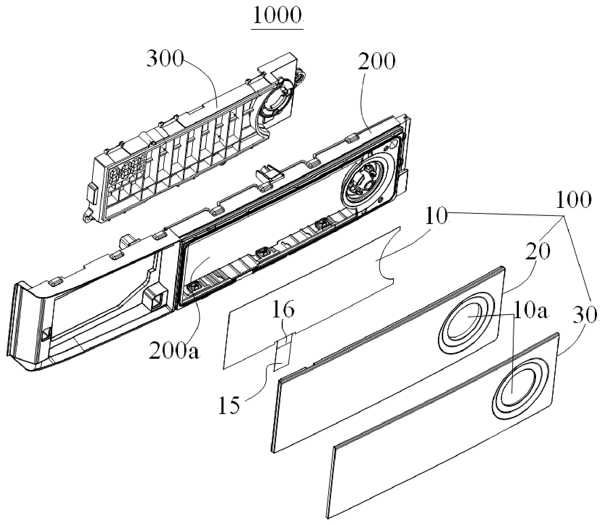

An embodiment of the application further provides a display panel 100, with reference to FIG. 4 and FIG. 8, the display panel 100 comprises an inner film and an injection molding layer 20, here the inner film is the film 100 according to any one of the embodiments of the application.

The injection molding layer 20 is injection molded on an outer surface of the inner film, that is, the inner film is located on an inner side of the injection molding layer 20.

Based on the injection molding layer 20, an outer side refers to a side facing toward a user, and an inner side refers to a side away from the user.

In the related art, since it is easy for the functional layers of the film to generate more accumulated errors, display effect of the display panel may not meet requirements, resulting in a relatively low qualification rate of the display panel.

In the display panel according to the embodiment of the application, since the functional layers of the film are arranged on two opposite sides of the substrate layer 11 respectively, the accumulated error is significantly reduced, which helps to improve the qualification rate of the display panel.

Exemplarily, with reference to FIG. 1 to FIG. 3, each of the functional layers comprises at least a pattern layer 13 and a circuit layer 12. That is, the pattern layer 13 and the circuit layer 12 are both printed on the substrate layer 11.

Specific types of patterns on the pattern layer are not limited, for example, they comprise, but are not limited to any one of any kind of language characters (such as Chinese letters, English letters, French letters, etc.), numbers, color combinations, patterns, and graphs presented in areas with different gray values, or a combination of any multiple kinds thereof.

The patterns on the pattern layer 13 may be colored or in black and white, which is not limited here.

The circuit layer 12 is provided with printed circuits, so that the circuit layer 12 as a whole presents a form of flexible circuit.

In the film according to the embodiment of the application, the circuit layer 12 and the pattern layer 13 are integrated and printed on the substrate layer 11, to be combined into a single body. In this way, a gap is not present between the circuit layer 12 and the pattern layer 13, and requirements on display clarity of patterns after lightening may be met; furthermore, air and vapor may not permeate between the circuit layer 12 and the pattern layer 13, which may reduce a possibility of the film being affected by moisture and ensure touch sensitivity.

In the film 100 according to the embodiment of the application, the pattern layer 13 may be printed first, and then the circuit layer 12 may be printed; or, the circuit layer 12 may be printed first, and then the pattern layer 13 may be printed. In a word, when the circuit layer 12 or the pattern layer 13 is printed at a later time, positions of electronic components on the circuit layer 12 may be well matched with corresponding patterns on the pattern layer 13, thereby improving accuracy of matching positions.

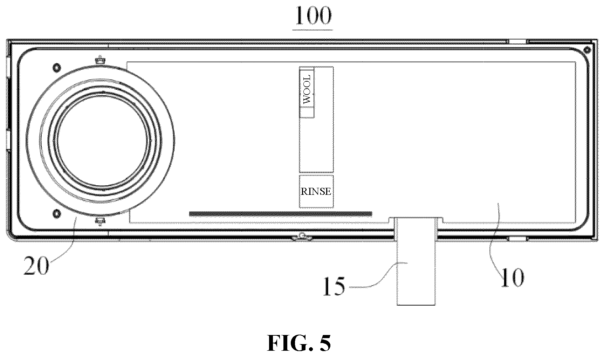

Exemplarily, with reference to FIG. 4, FIG. 5 and FIG. 8, the film 100 comprises a substrate connection belt 15 arranged on a side of the substrate layer 11 and connection circuits printed on the substrate connection belt 15, the connection circuits are configured to electrically connect circuits in the printed circuit layer to respective external circuits.

It should be noted that the substrate connection belt 15 and the substrate layer 11 are trimmed together in a trimming process to form a desired shape, that is, the substrate connection belt 15 and the substrate layer 11 are of an integrated structure.

In a process of printing each functional layer on the substrate layer 11, only the connection circuits need to be printed on the substrate connection belt 15. It is unnecessary to print the pattern layer or other layers on the substrate connection belt 15.

The circuits in the circuit layer 12 are configured to respond to touches on the display panel 100. In this embodiment, the display panel 100 is a touch panel.

The display panel 100 is formed by an in-mold injection molding process. Before pouring, the film 100 is placed and fixed in a mold cavity of a mold first, for example, fixed by vacuum adsorption, and the outer surface of the inner film faces toward interior of the mold cavity. Then, a liquid resin material is injected into the mold, the mold is opened after it is cooled, the injection molding layer 20 is formed after the resin material is cooled, and the film 100 is bonded to an inner surface of the injection molding layer 20. It should be noted that in the molding process, the substrate layer 11 of the film 100 does not peel off, and the film 100 is bonded as a whole to the inner surface of the injection molding layer 20.

In the display panel 100 according to the embodiment of the application, since the film 100 is completely bonded as a whole to the inner surface of the injection molding layer 20, that is, the pattern layer 13 and the circuit layer 12 are both firmly attached to the inner surface of the injection molding layer 20, it is unnecessary to manually attach films layer-by-layer, which may improve efficiency and reduce production cost. Furthermore, no gap is present between the pattern layer 11 and the circuit layer 12, which has good moisture-proof and water-proof performance and improves touch sensitivity and reliability. Furthermore, since positions of electronic components on the circuit layer 12 may be well matched with corresponding patterns on the pattern layer 13, appearance consistency of the display panel is relatively high.

Exemplarily, with reference to FIG. 4 and FIG. 8, the display panel 100 further comprises an outer film 30, the injection molding layer 20 is injection molded between the outer film 30 and the inner film.

Specific configurations of the outer film 30 are not limited, and any one of films in the related art may be used.

In the in-mold injection molding process, a liquid resin material is poured on an inner surface of the outer film 30 and the outer surface of the inner film, and after in-mold injection molding, the inner film, the injection molding layer 20 and the outer film 30 are combined into a single body, the inner film is bonded to the inner surface of the injection molding layer 20, and the outer film 30 is bonded to an outer surface of the injection molding layer 20.

The outer film 30 and the injection molding layer 20 are both made of light-transmission material, so that the patterns on the pattern layer 13 may be seen from the outside when the display panel 100 is lightened.

The outer film 30 plays a role of good protection, and reduces a probability that a surface of the display panel 100 is scratched.

In the display panel 100 according to the embodiment of the application, the circuit layer 12 and the pattern layer 13 are arranged on the inner film, and when the display panel 100 is not lightened, the pattern layer 13 and the circuit layer 12 may hardly appear in a visual field out of the display panel 100 with an action of the outer film 30 and the injection molding layer 20, that is, when the display panel 100 is not lightened, the user may hardly see the pattern layer 13 and the circuit layer 12 from the outside, and only when the display panel 100 is lightened, the user may see the patterns on the pattern layer 13.

It should be noted that after the inner film is formed, a layer of protective membrane which is easy to tear off may be covered on inner and outer sides of the inner film, to play a role of protecting the inner film.

After the outer film 30 is formed, a layer of protective membrane which is easy to tear off may be covered on inner and outer sides of the outer film 30, to play a role of protecting the outer film 30.

Exemplarily, the above display panel 100 may be formed by using the following processes.

First, after each of the inner film and the outer film 30 is printed and formed, protective membranes on surfaces at two sides of the inner film are torn off, and protective membranes on surfaces at two sides of the outer film 30 are torn off. Surface dust removal is performed on the inner film and the outer film 30, for example, dust removal is performed in a manner of combining manual dust removal and electrostatic dust removal.

Then, the inner film after dust removal is placed on one side of the mold cavity of the mold, and is fixed by vacuum adsorption; and the outer film 30 after dust removal is placed on another side of the mold cavity of the mold, and is fixed by vacuum adsorption. For example, the inner film is placed in a mold cavity of a fixed mold, and the outer film 30 is placed in a mold cavity of a movable mold; or, the inner film is placed in the mold cavity of the movable mold, and the outer film 30 is placed in the mold cavity of the fixed mold.

Then, the mold is closed, and a resin material is injected into the mold, so that the inner film and the outer film 30 are tightly attached to the injected resin material simultaneously, to form a predetermined shape.

The mold is opened after the resin is cooled, to obtain an injection molded product.

It should be noted that in some embodiments, the injection molded product may be a final finished product, that is, it is unnecessary to use other processes additionally.

In some other embodiments, the injection molded product is a semifinished product and needs to be further processed, for example, the injection molded product is irradiated with ultraviolet light, etc.

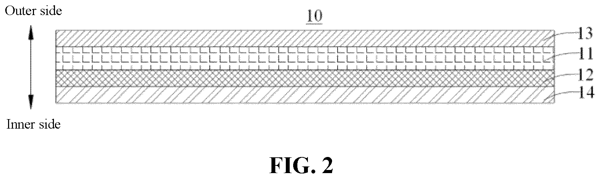

Exemplarily, with reference to FIG. 1 and FIG. 2, the film comprises a light homogenization layer 14 configured to homogenize light, the circuit layer 12 and the pattern layer 13 are both arranged on an outer side of the light homogenization layer 14. When the display panel 100 is lightened, light passes through the display panel 100 in a direction from inner to outer sides of the display panel 100, the light passes through the light homogenization layer 14 and then passes through the circuit layer 12 and the pattern layer 13. It should be noted that sequences of the circuit layer 12 and the pattern layer 13 are not limited here, for example, the light may pass through the circuit layer 12 and then pass through the pattern layer 13; or, the light may pass through the pattern layer 13 and then pass through the circuit layer 12. In a process of the light passing through the light homogenization layer 14, the light homogenization layer 14 achieves an effect of homogenizing light better, so that brightness presented by the display panel 100 is relatively uniform and soft, and the user cannot easily see a light emitting source behind the display panel.

It should be noted that the light homogenization layer plays a role of homogenizing light, and printing materials used by the light homogenization layer are not limited. For example, in some embodiments, the light homogenization layer is an ink diffusion layer, that is, the printing material of the light homogenization layer is ink, the ink is diffused in a printing manner and printed, and it should be noted that the ink diffusion layer may transmit light.

Exemplarily, with reference to FIG. 1 and FIG. 2, the light homogenization layer 14 is arranged on the inner surface of the substrate layer 11.

The ink in the light homogenization layer 14 is provided with powdery particles, bonding force between the particles and the substrate layer 11 or other adjacent layers is relatively weak. It should be noted that the substrate layer 11 is used as a carrier of the inner film, and if bonding force between the substrate layer 11 and the injection molding layer 20 is insufficient, the substrate layer 11 is easy to peel off, resulting in that the product becomes an unqualified product.

In this embodiment, since the light homogenization layer 14 is arranged on the inner surface of the injection molding layer 20, after the inner film is bonded to the injection molding layer 20, weak bonding force of the light homogenization layer 14 does not affect bonding force between the substrate layer 11 and the injection molding layer 20, a good bonding force is present between the substrate layer 11 and the injection molding layer 20, and the substrate layer 11 is not easy to peel off from the injection molding layer 20 in processes of performing environmental test after the display panel 100 is formed or the like, which may ensure reliability of the display panel 100.

In this embodiment, since the light homogenization layer 14 is arranged on an inner side of the substrate layer 11, even though bonding force between the light homogenization layer 14 and the substrate layer 11 is still relatively weak, however, the substrate layer 11 is used as a structural carrier, the substrate layer 11 itself is not easy to peel off from the injection molding layer 20, the light homogenization layer 14 itself is a thin coating layer, and the light homogenization layer 14 itself is not provided with the same sheet as the substrate layer 11, therefore the light homogenization layer 14 itself does not warp on the substrate layer 11 and peel off from the substrate layer 11.

Exemplarily, with reference to FIG. 1, FIG. 2 and FIG. 3, the pattern layer 13 is arranged on an outer surface of the circuit layer 12. In this embodiment, the pattern layer 13 plays a role of shielding the circuit layer 12, and the user cannot easily see the circuits on the circuit layer 12.

It should be noted that the pattern layer 13 may completely shield the circuit layer 12; or, a pattern area in the pattern layer 13 shields electronic components in the circuit layer 12.

In some embodiments, the pattern layer 13 is arranged on the outer surface of the substrate layer 11, and the circuit layer 12 is arranged on the inner surface of the substrate layer 11. That is, the pattern layer 13 and the circuit layer 12 are located on surfaces at two opposite sides of the substrate layer 11 respectively.

In some embodiments, with reference to FIG. 2, the pattern layer 13 is arranged on the outer surface of the substrate layer 11, the circuit layer 12 is arranged on the inner surface of the substrate layer 11, and the circuit layer 12 is arranged between the light homogenization layer 14 and the substrate layer 11. In this embodiment, the light homogenization layer 14 does not affect bonding force between the circuit layer 12 and the substrate layer 11, and may also play a role of homogenizing light; furthermore, the pattern layer 13 is located on the outer surface of the substrate layer 11, and the ink on the pattern layer 13 may be better attached to the injection molding layer 20, so that a clearer appearance sense may be presented.

In some other embodiments, with reference to FIG. 1, the pattern layer 13 and the circuit layer 12 are both arranged on the outer surface of the substrate layer 11, and the circuit layer 12 is arranged between the pattern layer 13 and the substrate layer 11.

In this embodiment, both the circuit layer 12 and the pattern layer 13 may be better attached to the injection molding layer 20; furthermore, the substrate layer 11 is located on an inner side of the circuit layer 12, and may also achieve an effect of protecting the circuit layer 12 better.

In some embodiments, the light homogenization layer 14 is arranged on an outermost layer at an inner side of the film.

In the embodiments of the application, the outermost layer refers to a most superficial layer, and there are no other printing layers on a side of the outermost layer away from the substrate layer 11.

In this embodiment, since the light homogenization layer 14 plays a role of homogenizing light, and there are no scratches caused by the user or external environment on the light homogenization layer 14, it is unnecessary to coat a layer on a surface of the light homogenization layer 14 additionally. In this way, cost may also be reduced on the premise of meeting usage performance.

Exemplarily, with reference to FIG. 4 and FIG. 8, the film comprises an isolation sheet 16, the isolation sheet 16 is arranged on an outer surface of the substrate connection belt 15, and covers at least a connection circuit printed at an end of the substrate connection belt 15 close to the substrate layer 11.

The isolation sheet 16 plays a role of protecting the circuits, to prevent the resin material injected in the injection molding process from burning down.

Specifically, in the injection molding process, the inner film is placed in the mold cavity of the mold, the end of the substrate connection belt 15 close to the substrate layer 11 is located in the mold cavity, another end of the substrate connection belt 15 away from the substrate layer 11 is located out of the mold cavity, and portions located in the mold cavity may be in contact with the injected resin. Therefore, the isolation sheet 16 needs to cover at least the portions of the substrate connection belt 15 located in the mold cavity, to isolate the circuits from the resin material, and prevent the resin material from burning the circuits down in the pouring process.

It should be noted that portions of the substrate connection belt 15 located out of the mold cavity may be covered with the isolation sheet 16, or may not be covered with the isolation sheet 16.

Exemplarily, main preparation operations of the inner film according to an embodiment will be briefly described below.

A preparation process of the inner film comprises the following operations.

Material trimming operation: a roll-shaped film is trimmed into a substrate sheet according to a designed shape such as a square shape, and it should be noted that a sheet corresponding to the substrate layer 11 and the substrate connection belt 15 are trimmed together.

Pre-shrinking operation: before printing, the trimmed substrate sheet is placed into an oven to heat the trimmed substrate sheet, to reduce a probability of shrinkage.

Print-processing operation: gloss oil, the circuit layer 12, the pattern layer 13, the light homogenization layer 14 or the like are coated on the trimmed substrate sheet, and the print-processed substrate sheet is placed in a high-temperature baking furnace to dry the print-processed substrate sheet, cure the ink, and evaporate solvents in the ink.

Protective membrane attaching operation: protective membranes are attached on two sides of the substrate sheet, to prevent surfaces of the printed substrate sheet from being scratched when positioning holes are punched.

Positioning hole punching operation: a positioning hole for die cutting and a positioning hole for hot-press molding are punched on the substrate sheet, and the positioning hole for die cutting and the positioning hole for hot-press molding should be punched accurately.

Hot-press molding operation: the substrate sheet is hot-pressed and shaped by a hot-press molding mold, and the substrate sheet is molded into an appearance shape of the product.

Die cutting operation: waste materials of the hot-press molded substrate sheet are cut off to obtain the inner film.

Several embodiments of the inner film according to the application will be described below with reference to the drawings.

### First embodiment

With reference to FIG. 1, the inner film comprises a substrate layer 11, a pattern layer 13, a circuit layer 12, and a light homogenization layer 14.

The light homogenization layer 14, the substrate layer 11, the circuit layer 12, and the pattern layer 13 are sequentially arranged in a direction from inner to outer sides.

In a process of preparing the inner film, before the circuit layer 12 is coated, a layer of gloss oil may be coated on the substrate layer 11 first, and the gloss oil achieves an isolation effect so that a printing medium between two adjacent layers may be isolated. After the layer of gloss oil is coated, the circuit layer 12 is coated, a layer of gloss oil is coated on the circuit layer 12, and then the pattern layer 13 is coated. Gloss oil may not be coated out of the pattern layer 13, and of course, a layer of gloss oil may also be coated.

It should be noted that the light homogenization layer 14, the substrate layer 11, the circuit layer 12, and the pattern layer 13 being sequentially arranged as described, refers to an arrangement sequence of the four printing layers, and other printing layers may be selectively added or may not be added between the light homogenization layer 14 and the substrate layer 11, between the substrate layer 11 and the circuit layer 12, and between the circuit layer 12 and the pattern layer 13.

### Second embodiment

With reference to FIG. 2, the inner film comprises a substrate layer 11, a pattern layer 13, a circuit layer 12, and a light homogenization layer 14.

The light homogenization layer 14, the circuit layer 12, the substrate layer 11, and the pattern layer 13 are sequentially arranged in a direction from inner to outer sides.

It may be understood that the above gloss oil may be coated between any two of these layers.

It should be noted that the light homogenization layer 14, the circuit layer 12, the substrate layer 11, and the pattern layer 13 being sequentially arranged as described, refers to an arrangement sequence of the four printing layers, and other printing layers may be selectively added or may not be added between the light homogenization layer 14 and the circuit layer 12, between the circuit layer 12 and the substrate layer 11, and between the substrate layer 11 and the pattern layer 13.

### Third embodiment

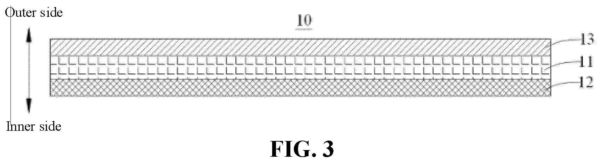

With reference to FIG. 3, main structures in the third embodiment are substantially the same as those in the second embodiment, and main differences there-between lie in: there is no light homogenization layer 14 in this embodiment.

The circuit layer 12, the substrate layer 11, and the pattern layer 13 are sequentially arranged in a direction from inner to outer sides.

For example, components for homogenizing light such as a thin film, a frosted glass or the like may be added between the light source and the display panel 100, to achieve an effect of homogenizing light.

It should be noted that the circuit layer 12, the substrate layer 11, and the pattern layer 13 being sequentially arranged as described, refers to an arrangement sequence of the three printing layers, and other printing layers may be selectively added or may not be added between the circuit layer 12 and the substrate layer 11, and between the substrate layer 11 and the pattern layer 13.

In the embodiments of the application, only the circuit layer 12, the pattern layer 13, the substrate layer 11, and the light homogenization layer 14 may be provided, and other functional layers besides these layers may not be provided. Of course, other functional layers may also be added according to requirements.

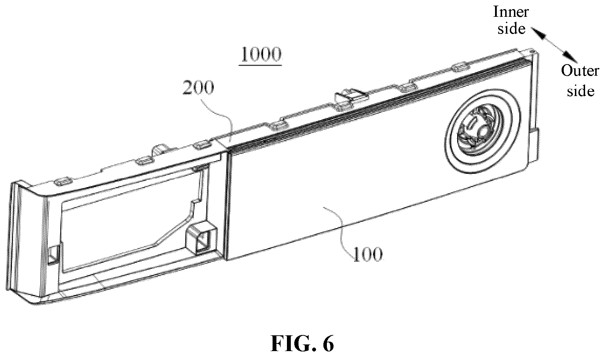

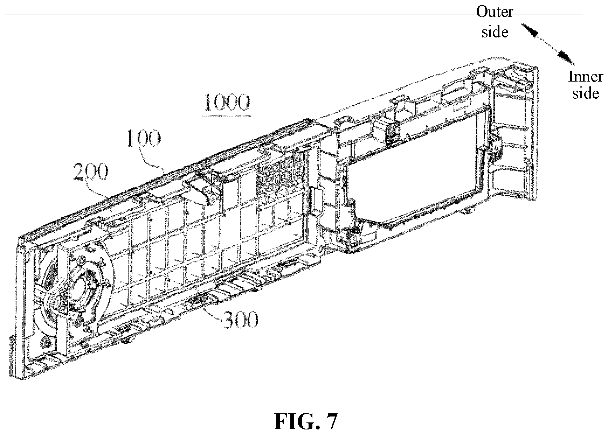

An embodiment of the application provides a display apparatus 1000, with reference to FIG. 6, FIG. 7 and FIG. 8, the display apparatus 1000 comprises a display board box 300 and the display panel 100 according to any one of the embodiments of the application.

A Printed Circuit Board (PCB) and a light emitting source are integrated on the display board box 300.

Types of the light emitting source are not limited, for example, the light emitting source is a lamp bead, a lamp strip, etc.

The circuits in the circuit layer 12 are electrically connected to the PCB.

The PCB is configured to control the light emitting source to output light to the display panel 100, and when the light emitting source emits light, the display panel 100 is lightened. In this way, it enables the display panel 100 to present a certain brightness, so that the user may see the pattern layer 13.

When the light emitting source is turned off, the user may hardly see the pattern layer 13.

Exemplarily, the display apparatus 1000 further comprises a mounting frame 200, and the display board box 300 and the display panel 100 are both mounted on the mounting frame 200.

The mounting frame 200 provides mounting support for the display board box 300 and the display panel 100.

Exemplarily, the mounting frame 200 is substantially in a frame-type structure, the mounting frame 200 is provided with a mounting space 200a, and the display board box 300 is embedded in the mounting space 200a. During assembly, the display board box 300 is embedded in the mounting space 200a from a rear side of the mounting frame 200 and is fixed on the mounting frame 200, for example, the display board box 300 may be fixed by screws, buckles or other manners.

The display panel 100 is connected to the mounting frame 200 and covers the mounting space 200a. The display panel 100 is mounted at the mounting space 200a from a front side of the mounting frame 200.

Application fields of the display panel 100 according to the embodiment of the application are not limited, and the display panel 100 may be used for any suitable product, such as a household appliance, a communication terminal, an automobile, medical industry, etc.

An embodiment of the application provides a household appliance, the household appliance comprises a housing and the display apparatus 1000 according to any one of the embodiments of the application, the display apparatus 1000 is arranged on the housing.

The display panel 100 of the display apparatus 1000 is used as a part of an appearance surface of the household appliance, and the user may operate the display panel 100 to implement human-machine interaction.

Types of the household appliance are not limited, such as a refrigerator, an air conditioner, an electric cooker, a clothes treatment device, etc.

Specific types of the clothes treatment device are not limited, for example, the clothes treatment device may be one of a washing machine, a clothes dryer or a washer-dryer; or, the clothes treatment device may be a kit device formed of the washing machine and the clothes dryer stacked in an up-down direction.

Exemplarily, an example in which the household appliance is a clothes treatment device is used here.

The clothes treatment device comprises a knob, the user may rotate the knob to select washing and care programs, such as standard washing, quick washing, wool washing, drum self-cleaning, etc.

With reference to FIG. 4 and FIG. 8, the display panel 100 is provided with a mounting hole 10a passing therethrough, and the knob rotatably passes through the mounting hole 10a and is arranged in the mounting hole 10a.

In this embodiment, the user may touch the display panel 100 to select parameters corresponding to respective washing and care programs, such as temperature, amount of water, etc.

In descriptions of the application, descriptions made with reference to terms "an embodiment", "some embodiments", "an example", "a specific example", or "some examples", or the like mean that specific features, structures, materials or characteristics described with reference to the embodiment or example are comprised in at least one embodiment or example of the embodiments of the application. In the application, schematic expressions of the above terms are not necessarily directed to the same embodiment or example. Furthermore, the described specific features, structures, materials or characteristics may be combined in any suitable manner in any one or more embodiments or examples. Furthermore, different embodiments or examples described in the application and features of different embodiments or examples may be combined by those skilled in the art without conflicting with each other.

The above descriptions are only preferred embodiments of the application and are not intended to limit the application, and for those skilled in the art, the application may be subjected to various modifications and variations. Any modification, equivalent replacement, improvement or the like made within the spirit and principle of the application, shall fall within the scope of protection of the application.

## Claims

1. A film for a display panel, comprising:
a substrate layer, provided with an outer surface and an inner surface; and
at least two functional layers, wherein a part of each of the functional layers is printed on the outer surface of the substrate layer, and a remaining part of each of the functional layers is printed on the inner surface of the substrate layer.

2. The film of claim 1, wherein each of the functional layers comprises a pattern layer and a circuit layer, and the circuit layer is located on an inner side of the pattern layer.

3. The film of claim 2, wherein the circuit layer, the substrate layer, and the pattern layer are sequentially arranged in a direction from an inner side to an outer side.

4. The film of claim 2, wherein each of the functional layers comprises a light homogenization layer configured to homogenize light, the pattern layer and the circuit layer are both located on an outer side of the light homogenization layer.

5. The film of claim 4, wherein the light homogenization layer, the substrate layer, the circuit layer, and the pattern layer are sequentially arranged in a direction from an inner side to an outer side.

6. The film of claim 4, wherein the light homogenization layer, the circuit layer, the substrate layer, and the pattern layer are sequentially arranged in a direction from an inner side to an outer side.

7. The film of any one of claims 4 to 6, wherein the light homogenization layer is an ink diffusion layer.

8. The film of claim 2, wherein the film comprises an isolation sheet and a substrate connection belt arranged on a side of the substrate layer, connection circuits electrically connected to circuits in the circuit layer are arranged on the substrate connection belt, and the isolation sheet covers at least a connection circuit printed at an end of the substrate connection belt close to the substrate layer.

9. A display panel, comprising:
an inner film, being a film of any one of claims 1 to 8; and
an injection molding layer, injection molded on an outer surface of the inner film.

10. The display panel of claim 9, wherein the display panel comprises an outer film, the injection molding layer is injection molded between the outer film and the inner film.

11. A display apparatus, comprising:
a display board box, provided with a light emitting source thereon; and
a display panel of claim 9 or 10, the display board box arranged on an inner side of the display panel, and the light emitting source configured to output light to the display panel.

12. The display apparatus of claim 11, wherein the display apparatus comprises a mounting frame, the mounting frame is provided with a mounting space, the display board box is embedded in the mounting space, and the display panel is connected to the mounting frame and covers the mounting space.

13. A household appliance, comprising a housing and a display apparatus of claim 11 or 12, the display apparatus arranged on the housing.

14. The household appliance of claim 13, wherein the household appliance is a clothes treatment device, the clothes treatment device comprises a knob configured to select a washing and care program, the display panel is provided with a mounting hole passing therethrough, and the knob rotatably passes through the mounting hole and is arranged in the mounting hole.
